# EUROPEAN PATENT APPLICATION

(11) **EP 4 425 758 A1**
(43) Date of publication of application: **04.09.2024**
(21) Application number: 23159557.0
(22) Date of filing: 02.03.2023
(51) Int. Cl.: H02K 1/32, H02K 9/19, H02K 5/20, H02K 7/102

(54) **AN ELECTRICAL MACHINE ARRANGEMENT**

(71) Applicant: VOLVO TRUCK CORPORATION, 405 08 Göteborg (SE)
(72) Inventor: ANDERSSON, Rasmus, 422 49 Hisings Backa (SE); LORD, John, 424 72 Olofstorp (SE)
(74) Representative: Ström & Gulliksson AB

(57) **Abstract**

An electrical machine arrangement is provided, comprising: an electrical machine (**30**) having a rotor (**40**), a stator (**50**), and a housing (**60**) enclosing said rotor (**40**) and stator (**50**), and an oil cooling system (**70**) connected to the electrical machine (**30**) and configured to control the oil flow to and from a first axial side (**81**) of the electrical machine (**30**), wherein the rotor (**40**) comprises at least one channel (**44**) for pumping oil from the first axial side (**S1**) of the electrical machine (**30**) to a second axial side (**S2**) of the electrical machine (**30**).

## Description

### TECHNICAL FIELD

The disclosure relates generally to electrical machine arrangements and applications thereof. In particular aspects, the disclosure relates to an electrical machine and an oil cooling system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Modem vehicles may be provided with electrical machines. One particular use of electric machines in vehicles is for traction purpose, i.e. the electrical machines are arranged as part of the drive train to perform the desired propulsion of the vehicle. These electrical machines are connected to one or more battery arrangements which provide the electrical machines with the required electrical power.

Electrical machines can also be used to provide retardation of the vehicle, changing the operational mode of the electrical machine from propulsion mode to regeneration mode. In such case the regeneration of electrical power will cause a retarding effect on the vehicle.

However, braking of the electric vehicle using the electrical machine can only be performed as long as the associated battery arrangement is capable of receiving the regenerated electrical power. If the battery arrangement is fully (or close to fully) charged, braking can no longer be achieved by means of the electrical machine.

Based on this, there is a need for improved solutions enabling the electrical machine of a vehicle to brake the vehicle even if the associated battery arrangement is not capable of receiving the generated electrical power.

### SUMMARY

According to first aspect of the disclosure, an electrical machine arrangement is provided. The electrical machine arrangement comprises an electrical machine having a rotor, a stator, and a housing enclosing said rotor and stator, and an oil cooling system connected to the electrical machine and configured to control the oil flow to and from a first axial side of the electrical machine. The rotor comprises at least one channel for pumping oil from the first axial side of the electrical machine to a second axial side of the electrical machine. A technical benefit may include the creating of pump losses in the electrical machine, causing a braking effect.

In some examples, including in at least one preferred example, optionally the oil cooling system comprises a feeder pump. A technical benefit may include that a low complex solution is provided which allows efficient control of the amount of cooling oil inside the electrical machine, and hence controlling of the pumping effect.

In some examples, including in at least one preferred example, optionally the feeder pump is arranged remote from the electrical machine. A technical benefit may include minimum redesign of the electrical machine,

In some examples, including in at least one preferred example, the oil cooling system further comprises a sump and wherein the feeder pump is configured to pump oil from said sump. A technical benefit may include increased braking capacity, since the sump may hold a larger volume of oil. A further technical benefit may include increased cooling capacity, as heat can be dissipated more efficiently.

In some examples, including in at least one preferred example, the oil cooling system further comprises an outlet valve configured to control the oil flow out from the first axial side of the electrical machine. A technical benefit may include that a low complex solution is provided which allows efficient control of the amount of cooling oil inside the electrical machine, and hence controlling of the pumping effect.

In some examples, including in at least one preferred example, the oil cooling system further comprises a control unit configured to control the operation of the feeder pump and/or the outlet valve. A technical benefit may include that a high performance solution is provided which allows improved and more advanced control of the amount of cooling oil inside the electrical machine, and hence controlling of the pumping effect.

In some examples, including in at least one preferred example, the electrical machine further comprises an oil return channel arranged in the radial space formed between the rotor and the stator. A technical benefit may include improved braking capacity using a minimum redesign, as the oil return flow will cause a retardation effect of the rotor.

In some examples, including in at least one preferred example, the rotor comprises a plurality of channels for pumping oil from the first axial side of the electrical machine to a second axial side of the electrical machine. A technical benefit may include increased braking capacity as more oil will be allowed to be pumped through the electrical machine.

In some examples, including in at least one preferred example, the plurality of channels are distributed at an equal angular space around the rotor. A technical benefit may include improved stability during operation, as the pumping channels are symmetrically arranged at the rotor.

In some examples, including in at least one preferred example, the at least one channel is arranged at an outer circumference of said rotor. A technical benefit may include simplified manufacturing of the rotor.

In some examples, including in at least one preferred example, the at least one channel is embedded in the rotor and arranged radially inside the maximum rotor radius. A technical benefit may include a more robust manufacturing, as the outer circumference of the rotor will be left intact.

In some examples, including in at least one preferred example, the at least one channel extends axially along the entire rotor from the first axial side of the electrical machine to a second axial side of the electrical machine. A technical benefit may include increased pumping capacity, as the full length of the rotor is utilized.

In some examples, including in at least one preferred example, the at least one channel extends along a constant radius. A technical benefit may include a more simple manufacturing, since the channels are arranged at the same radius of the rotor.

In some examples, including in at least one preferred example, the at least one channel extends from an inner radius at the first axial side of the electrical machine to an outer radius at the second axial side of the electrical machine. A technical benefit may include improved pumping capability, thereby causing improved braking action, since the oil will be subject to centrifugal forces during rotation of the rotor thereby pressing the oil from one side of the rotor to the opposite side of the rotor.

In some examples, including in at least one preferred example, the at least one channel extends at a constant circumferential angle. A technical benefit may include less complex manufacturing, since the at least one channel will exhibit a straight shape.

In some examples, including in at least one preferred example, the at least one channel extends at a varying circumferential angle. A technical benefit may include a higher pumping capability, and thereby increased pumping capability, as twisted channels may transport more oil.

In some examples, including in at least one preferred example, the rotor is provided with an axial flow pump arranged at the first axial side of the electrical machine. A technical benefit may include improved braking capability, as an axial flow pump can push more oil through the rotor.

In some examples, including in at least one preferred example, the oil cooling system comprises a feeder pump, a sump, an outlet valve, and a control unit. The feeder pump is arranged remote from the electrical machine and configured to pump oil from the sump, wherein the outlet valve is configured to control the oil flow out from the first axial side of the electrical machine, and wherein the control unit is configured to control the operation of the feeder pump and/or the outlet valve. The electrical machine further comprises an oil return channel arranged in the radial space formed between the rotor and the stator. The rotor comprises a plurality of channels for pumping oil from the first axial side of the electrical machine to a second axial side of the electrical machine. The plurality of channels are distributed at an equal angular space around the rotor, wherein the plurality of channels are arranged at an outer circumference of the rotor or embedded in the rotor and arranged radially inside the maximum rotor radius. The plurality of channels extend axially along the entire rotor from the first axial side of the electrical machine to the second axial side of the electrical machine. The plurality of channels extend at a constant radius or from an inner radius at the first axial side of the electrical machine to an outer radius at the second axial side of the electrical machine. Each of the plurality of channels extends at a constant circumferential angle or at a varying circumferential angle, and the rotor is provided with an axial flow pump arranged at the first axial side of the electrical machine.

According to a second aspect of the disclosure, a vehicle is provided comprising the electrical machine arrangement according to the first aspect. The second aspect may seek to improve driving performance of vehicle by utilizing an electrical machine arrangement.

According to a third aspect of the disclosure, a method for cooling an electrical machine is provided. The method comprises: feeding cooling oil to a first axial side of the electrical machine, pumping the cooling oil from the first axial side of the electrical machine to a second axial side of the electrical machine through at least one channel extending along the rotor, and controlling the amount of cooling oil at the first axial side in order to control a retarding effect of the electrical machine.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to an example.
**FIG. 2** is an exemplary cross-sectional view of an electrical machine arrangement according to an example.
**FIG. 3** is an exemplary cross-sectional view of an electrical machine arrangement according to a further example.
**FIG. 4** is an exemplary cross-sectional view of an electrical machine arrangement according to one example.
**FIG. 5A** is an exemplary cross-sectional view of a rotor forming part of an electrical machine arrangement according to an example.
**FIG. 5B** is an exemplary cross-sectional view of a rotor forming part of an electrical machine arrangement according to an example.
**FIG. 5C** is an exemplary side view of a rotor forming part of an electrical machine arrangement according to a further example.
**FIG. 6** is another exemplary view of an electrical machine arrangement according to an example.
**FIG. 7** is an exemplary schematic view of a method for cooling an electrical machine according to an example.

### DETAILED DESCRIPTION

The detailed description set forth below provides information and examples of the disclosed technology with sufficient detail to enable those skilled in the art to practice the disclosure.

Details of an electrical machine arrangement will in the following be described. The electrical machine arrangement according to the present disclosure aims to add a braking functionality to the electrical machine by utilizing the oil already provided to cool down the electrical machine during operation. By implementing the electrical machine arrangement in a vehicle, a braking force can be applied to the vehicle by means of the electrical machine even if regeneration of electrical power is not available due to the associated energy storage system, or battery arrangement is fully, or almost fully, charged.

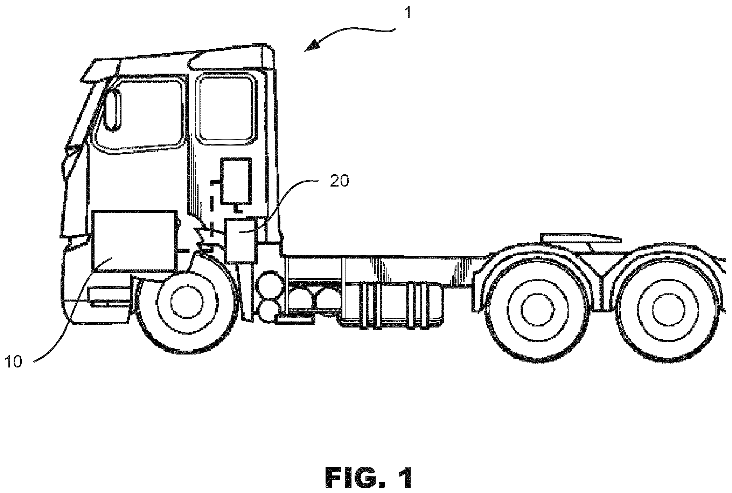

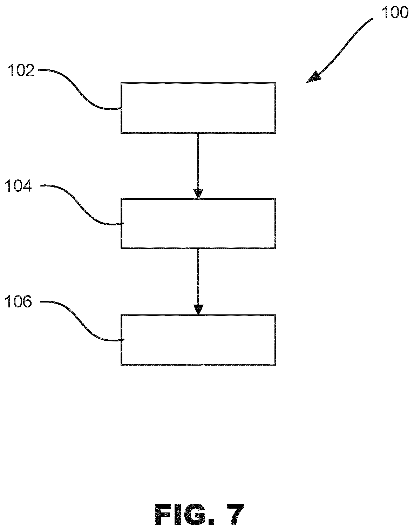

With reference to **FIG. 1**, a vehicle **1**, here embodied as a heavy duty truck **1**, is disclosed for which an electrical machine arrangement **10** and a method **100** (see **FIG. 7**) for cooling an electrical machine of the electrical machine arrangement **100** are advantageous. However, the electrical machine arrangement **10** and/or the method **100** may as well be implemented in other types of applications, in particular in other types of vehicles such as a busses, light-weight trucks, passenger cars, marine applications, construction equipment, etc.

The vehicle **1** is preferably an electric vehicle, such as a full electric vehicle or a hybrid vehicle, comprising at least one electrical machine arrangement **10.** Typically the vehicle **1** also comprises an energy storage system **20** comprising energy storage or energy transformation devices, typically batteries or fuel cells. The energy storage system **20** is arranged and configured to power the electrical machine arrangement **10.**

The vehicle **1** typically further comprises other parts of a powertrain such as a transmission, drive shafts, and wheels (not shown in details in **FIG. 1**).

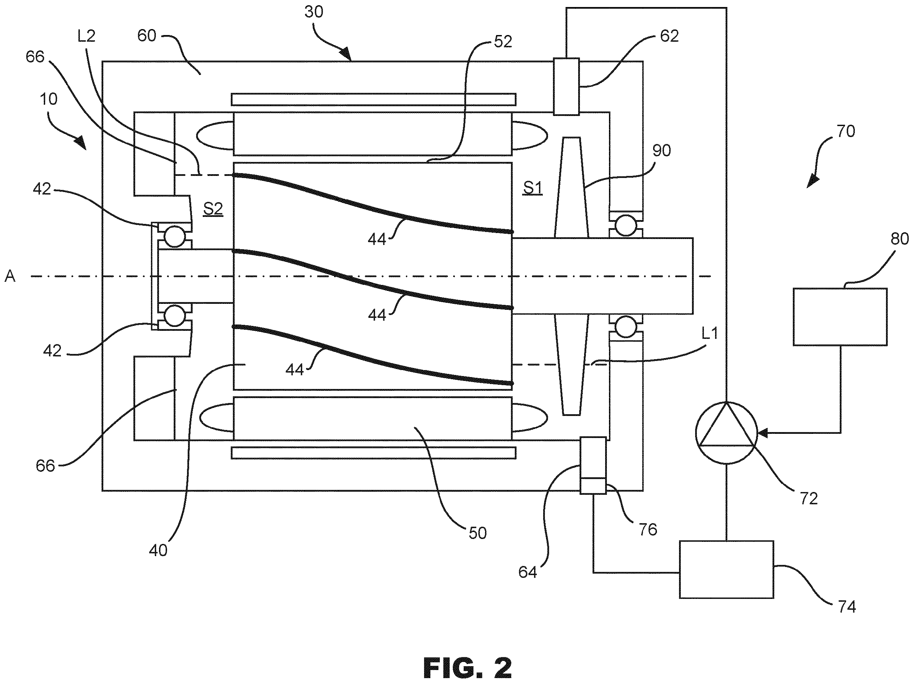

An example of an electrical machine arrangement **10** is shown in **FIG. 2**. The electrical machine arrangement **10** comprises an electrical machine **30**. The electrical machine **30** has a rotor **40**, a stator **50**, and a housing **60**. The rotor **40** is rotatably supported by the housing **60** e.g. by means of one or more bearings **42**, allowing the rotor **40** to rotate around rotational axis **A**. The stator **50** is also enclosed by the housing **60** and arranged radially outside of the rotor **40**.

The electrical machine arrangement **10** further comprises an oil cooling system **70**. The oil cooling system **70** is configured to provide the electrical machine **30** with cooling oil, thereby preventing the electrical machine **30** from overheating during operation. The oil cooling system **70** comprises an oil feeder pump **72** pumping oil from an oil sump **74**. Oil is entering the electrical machine **30** through an inlet port **62** arranged at the housing **60**, and oil is exiting the electrical machine **30** through an oil outlet port **64** also arranged at the housing **60** but spaced apart from the oil inlet port **62**. Preferably, the oil inlet port **62** is arranged at an upper part of the housing **60** while the oil outlet port **64** is arranged at a bottom part of the housing **60** such that gravity will cause a flow of oil from the oil inlet port **62** to the oil outlet port **64**.

The oil exiting the electrical machine **30** will flow from the oil outlet port **64** to the sump **74**. In the shown example the oil outlet port **64** comprises an outlet valve **76**. The oil outlet valve **76** may in other examples be arranged remote from the oil outlet port **64** but in the oil flow path from the oil outlet port **64** to the sump **74**.

The oil inlet port **62** and the oil outlet port **64** are arranged on the same axial side of the electrical machine **30**, and in particular on the same first axial side **S1** of the rotor **40**. Hence, when the feeder pump **72** is running oil will be pumped from the sump **74** into the housing **60** on a first axial side **S1** of the rotor **40**, and fill this first axial side **S1** of the rotor **40** up to an oil level **L1**. The amount of oil at the first axial side **S1** of the rotor **40** will be dependent on the pump rate of the feeder pump **72**, as well as on the amount of oil exiting through the oil outlet port **64**.

In order to effectively control the amount of oil at the first axial side **S1** of the rotor **40**, the oil cooling system **70** comprises a control unit **80**. The control unit **80** is preferably in communication with the feeder pump **72** as well as with the outlet valve **76** and configured to issue control signals to these components in order to control their respective operation in real time.

In order to provide for the desired braking effect the rotor **40** comprises one or more channels **44**. In the shown example, the rotor **40** is provided with a plurality of channels **44** evenly distributed around the rotor **40**. In some examples the rotor **40** comprises a plurality of channels **44** arranged non-evenly around the rotor **40.** The channels **44** extend along the rotor **40** from the first axial side **S1** to the opposite axial side **S2.** Each channel **44** is configured to guide oil from the first axial side **S1** to the opposite axial side **S2.**

When oil is flowing through the channels **44** a pumping action will be obtained, causing a braking action to the electrical machine **30.** In the shown example, an axial flow pump **90** is provided in order to enhance the pumping effect. The axial flow pump **90** is in this example shown as an impeller, arranged on the rotor **40** at the first axial side **S1**. When the rotor **40** is spinning the impeller will throw oil from the first axial side **S1** towards the opposite axial side **S2**, thereby causing a forced oil flow through the channels **44.** Preferably, the axial flow pump **90** is designed to direct the flow of oil towards the center of the rotor **40** rather than spraying the oil radially outwards.

It should however be appreciated that the pumping effect may be achieved also without the provision of an axial flow pump **90**, as the increase of oil at the first axial side **S1** will cause the oil to flow through the channel(s) **44** to the second, opposite axial side **S2.**

The oil exiting the channels **44** will fill up the opposite axial side **S2** to a level **L2.** The opposite axial side **S2** may be provided with a partition wall **66** extending inside the housing **60** in order to delimit the volume at the opposite axial side **S2** of the rotor **40.**

As the oil is filling up the opposite axial side **S2** of the rotor **40**, a return oil channel **52** arranged in the radial space between the rotor **40** and the stator **50** will allow oil to flow back to the first axial side **S1** of the rotor **40.** This return flow will create a further drag effect on the rotor **40**, thereby adding braking effect to the electrical machine arrangement **10.**

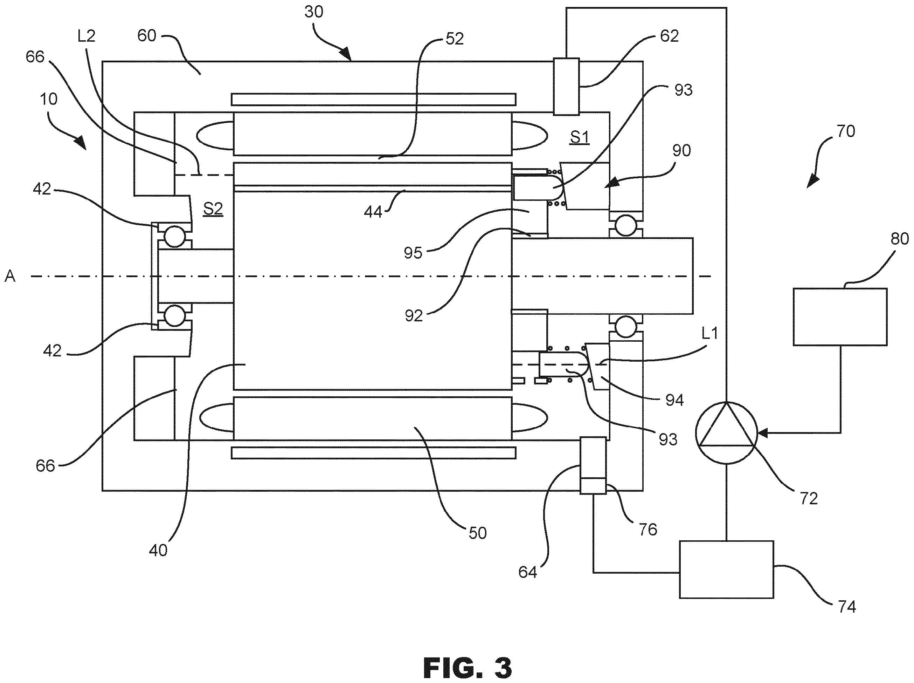

Another example of an electrical machine arrangement **10** is shown in **FIG. 3**. The electrical machine arrangement **10** is identical to the example described with reference to **FIG. 2**, except for the channel **44** and the axial flow pump **90.** Hence, similar features and their respective technical description will not be repeated.

In the example of **FIG. 3** the axial flow pump **90** is in the form of an axial piston pump. The axial piston pump **90** comprises a number of pistons **93** rotatably mounted on the rotor **40** and reciprocally moving due to their interaction with a tilted swash plate **94.** When the pistons **93** are at an extended position, which position may be biased by a piston spring, oil is allowed to enter a cylinder block **95.** As the pistons **93** rotate, they will reduce the cylinder volume thereby producing an increased oil pressure inside the cylinder block **95.** At a position where the pressure is increased, the cylinder block **95** connects to one or more channels **44** extending through the rotor **40** from the first axial side **S1** to the opposite axial side **S2**. Oil will thereby be pumped from the first axial side **S1** to the opposite side **S2** by means of the axial flow pump **90**, and return back to the first axial side **S1** through the return oil channel **52**.

In order to reduce the rotational mass when there is no need for braking, the cylinder block **95** may be connected to the rotor **40** via a disconnect coupling **92**. The disconnect coupling **92** may be actuated in any conventional way, which is known in the art. In a preferred example actuation of the disconnect coupling **92** can be controlled by the control unit **80**, such that the axial flow pump **90** is connected and in operation immediately when the feeder pump **72** is started.

It should be noted that the same concept of using a disconnect coupling **92** may also be implemented for the axial flow pump **90** shown in **FIG. 2**.

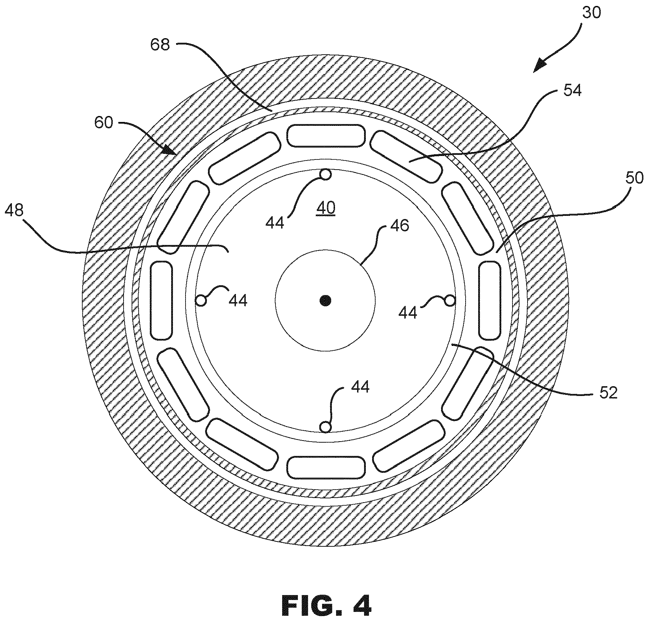

In **FIG. 4** the electrical machine **30** is shown in cross section. The housing **60** is here shown as having a cylindrical shape, and a water j acket **68** extends around the circumference to cool down the stator **50.** The stator **50** comprises end turns **54** distributed evenly around the stator **50**, wherein each end turn **54** corresponds to a stator pole. It should be noted that any suitable number of stator poles could be considered for the electrical machine **30.**

The rotor **40** is arranged radially inside the stator **50**, wherein a radial space is provided between the rotor **40** and the stator **50** that forms the return oil channel **52.**

The rotor **40** comprises an output shaft **46** of a slightly smaller diameter than the main body **48** of the rotor **40.** The main body **48** is provided with the one or more oil channels **44.** Each oil channel **44** extends from the first axial side of the rotor **40** to the opposite axial side. In the shown example there are four oil channels **44** spaced apart by 90°. The oil channels **44** are arranged immediately inside the outer periphery of the rotor **40.**

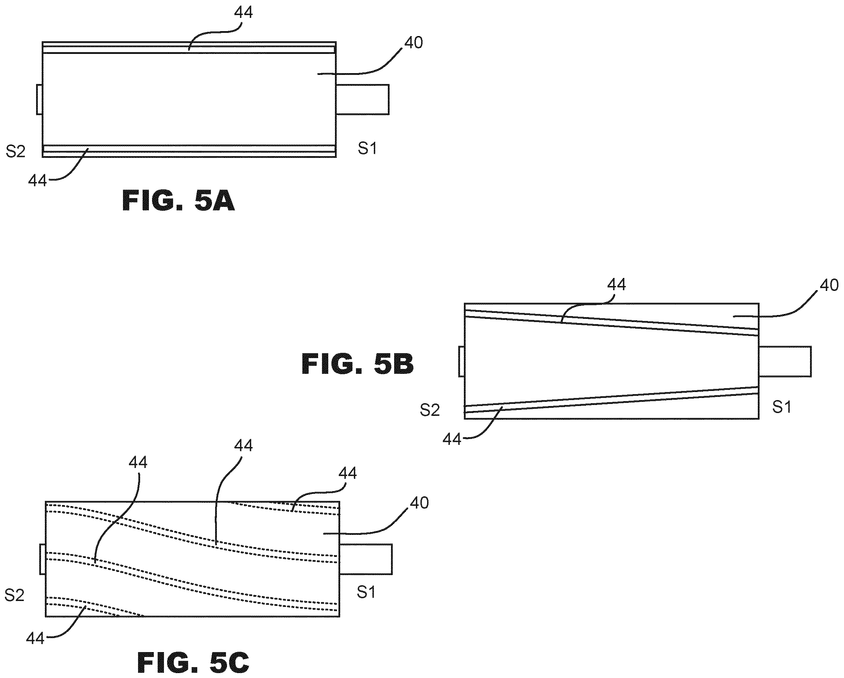

The oil channels **44** may be configured according to various principles, as exemplified in **FIGS. 5A-C**. Starting in **FIG. 5A**, the rotor **40** is shown in cross-section. The rotor **40** is provided with a plurality of oil channels **44** arranged at an outer radius (i.e. close to the outer circumference of the rotor **40**). The oil channels **44** extend straight through the rotor **40**, at a constant radius.

In **FIG. 5B** another alternative is shown also in cross-section. Here the oil channels **44** extend straight through the rotor **40** but at a varying, in particular an increasing, radius. At the first axial side **S1** (i.e. the side being subject to oil filling from the feeder pump) the oil channels **44** are arranged at an inner radius, while their radial position increase along the rotor **40.** At the opposite axial side **S2** the oil channels **44** are arranged at an outer radius.

In **FIG. 5C** a further alternative is shown. Here the oil channels **44** are no longer straight, but the circumferential position is varying along the length of the rotor **40.** In particular, each oil channel **44** is twisted whereby the length of each oil channel **44** is increased in comparison to straight channels. The twist angle may be small (as shown in **FIG. 5C**) or significantly larger, resulting in a helical distribution of a channel **44**.

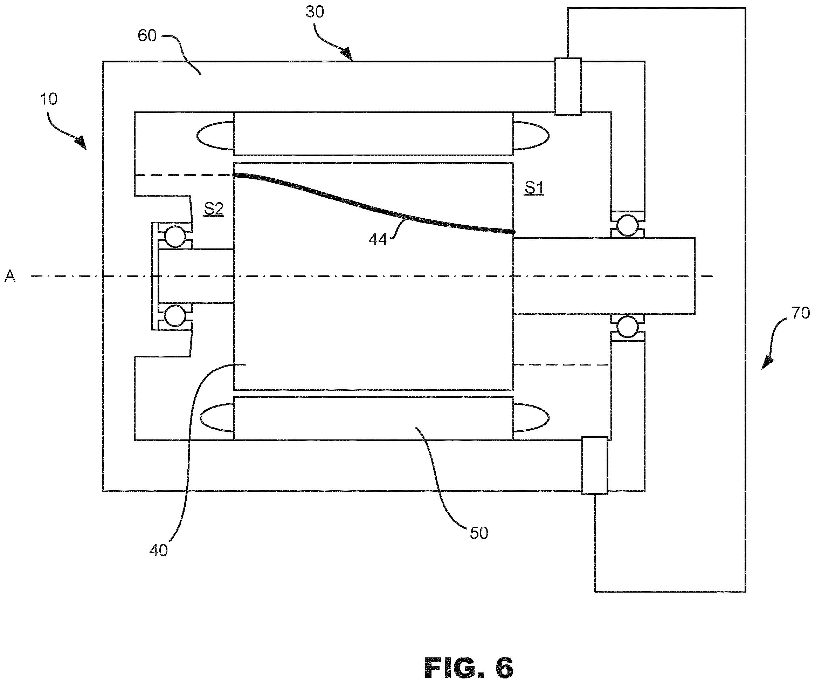

**FIG. 6** is another view of an electrical machine arrangement **10**, according to an example. The electrical machine arrangement **10** comprises an electrical machine **30** having a rotor **40**, a stator **50**, and a housing **60** enclosing said rotor **40** and stator **50**. The electrical machine arrangement **10** further comprises an oil cooling system **70** connected to the electrical machine **30** and configured to control the oil flow to and from a first axial side **S1** of the electrical machine **30.** The rotor **40** comprises at least one channel **44** for pumping oil from the first axial side **S1** of the electrical machine **30** to a second axial side **S2** of the electrical machine **30.**

Now turning to **FIG. 7** a method **100** for cooling an electrical machine **30** is schematically shown. The method **100** comprises feeding **102** cooling oil to a first axial side **S1** of the electrical machine **30,** and pumping **104** the cooling oil from the first axial side **S1** of the electrical machine **30** to a second, opposite axial side **S2** of the electrical machine **30** through at least one channel **40** extending along a rotor **40** of the electrical machine **30.** The method **100** further comprises controlling **106** the amount of cooling oil at the first axial side **S1** in order to control a retarding effect of the electrical machine **30.**

Example 1: An electrical machine arrangement, comprising: an electrical machine **30** having a rotor **40**, a stator **50**, and a housing **60** enclosing said rotor **40** and stator **50**, and an oil cooling system **70** connected to the electrical machine **30** and configured to control the oil flow to and from a first axial side **S1** of the electrical machine **30**, wherein the rotor **40** comprises at least one channel **44** for pumping oil from the first axial side **S1** of the electrical machine **30** to a second axial side **S2** of the electrical machine **30.**

Example 2: The electrical machine arrangement of Example 1, wherein the oil cooling system **70** comprises a feeder pump **72.**

Example 3: The electrical machine arrangement of Example 1 or 2, wherein the feeder pump **72** is arranged remote from the electrical machine **30.**

Example 4: The electrical machine arrangement of Example 2 or 3, wherein the oil cooling system **70** further comprises a sump **74** and wherein the feeder pump **72** is configured to pump oil from said sump **74.**

Example 5: The electrical machine arrangement of any of Examples 2 to 4, wherein the oil cooling system **70** further comprises an outlet valve **76** configured to control the oil flow out from the first axial side **S1** of the electrical machine **30.**

Example 6: The electrical machine arrangement of Example 5, wherein the oil cooling system **70** further comprises a control unit **80** configured to control the operation of the feeder pump **72** and/or the outlet valve **76.**

Example 7: The electrical machine arrangement of any of Examples 1-6, wherein the electrical machine **30** further comprises an oil return channel **52** arranged in the radial space formed between the rotor **40** and the stator **50.**

Example 8: The electrical machine arrangement of any of Examples 1-7, wherein the rotor **40** comprises a plurality of channels **44** for pumping oil from the first axial side **S1** of the electrical machine **30** to a second axial side **S2** of the electrical machine **30.**

Example 9: The electrical machine arrangement of Example 8, wherein the plurality of channels **44** are distributed at an equal angular space around the rotor **40.**

Example 10: The electrical machine arrangement of any of Examples 1-9, wherein the at least one channel **40** is arranged at an outer circumference of said rotor **40.**

Example 11: The electrical machine arrangement of any of Examples 1-9, wherein the at least one channel **44** is embedded in the rotor **40** and arranged radially inside the maximum rotor radius.

Example 12: The electrical machine arrangement of any of Examples 1-11, wherein the at least one channel **44** extends axially along the entire rotor **40** from the first axial side **S1** of the electrical machine **30** to a second axial side **S2** of the electrical machine **30.**

Example 13: The electrical machine arrangement of any of Examples 1-12, wherein the at least one channel **44** extends along a constant radius.

Example 14: The electrical machine arrangement of any of Examples 1-12, wherein the at least one channel **44** extends from an inner radius at the first axial side **S1** of the electrical machine **30** to an outer radius at the second axial side **S2** of the electrical machine **30.**

Example 15: The electrical machine arrangement of any of Examples 1-14, wherein the at least one channel **44** extends at a constant circumferential angle.

Example 16: The electrical machine arrangement of any of Examples 1-14, wherein the at least one channel **44** extends at a varying circumferential angle.

Example 17: The electrical machine arrangement of any of Examples 1-16, wherein the rotor **40** is provided with an axial flow pump **90** arranged at the first axial side **S1** of the electrical machine **30.**

Example 18: The electrical machine arrangement of Example 1, wherein the oil cooling system **70** comprises a feeder pump **72**, a sump **74**, an outlet valve **76**, and a control unit **80**, wherein the feeder pump **72** is arranged remote from the electrical machine **30** and configured to pump oil from the sump **74**, wherein the outlet valve **76** is configured to control the oil flow out from the first axial side **S1** of the electrical machine, and wherein the control unit **80** is configured to control the operation of the feeder pump **72** and/or the outlet valve **76**, wherein the electrical machine 30 further comprises an oil return channel **52** arranged in the radial space formed between the rotor **40** and the stator **50**, wherein the rotor **40** comprises a plurality of channels **44** for pumping oil from the first axial side **S1** of the electrical machine **30** to a second axial side **S2** of the electrical machine **30**, wherein the plurality of channels **44** are distributed at an equal angular space around the rotor **40**, wherein the plurality of channels **44** are arranged at an outer circumference of the rotor **44** or embedded in the rotor **40** and arranged radially inside the maximum rotor radius, wherein the plurality of channels **44** extend axially along the entire rotor **40** from the first axial side **S1** of the electrical machine **30** to the second axial side **S2** of the electrical machine **30**, wherein the plurality of channels **44** extend at a constant radius or from an inner radius at the first axial side **S1** of the electrical machine **30** to an outer radius at the second axial side **S2** of the electrical machine **30**, wherein each of the plurality of channels **44** extends at a constant circumferential angle or at a varying circumferential angle, and wherein the rotor **40** is provided with an axial flow pump **90** arranged at the first axial side **S1** of the electrical machine **30.**

Example 19: A vehicle comprising the electrical machine arrangement **10** according to any of Examples 1-13.

Example 20: A method for cooling an electrical machine, comprising: feeding cooling oil to a first axial side of the electrical machine, pumping the cooling oil from the first axial side of the electrical machine to a second axial side of the electrical machine through at least one channel extending along the rotor, and controlling the amount of cooling oil at the first axial side in order to control a retarding effect of the electrical machine.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical machine arrangement, comprising: an electrical machine (**30**) having a rotor (**40**), a stator (**50**), and a housing (**60**) enclosing said rotor (**40**) and stator (**50**), and an oil cooling system (**70**) connected to the electrical machine (**30**) and configured to control the oil flow to and from a first axial side (**S1**) of the electrical machine (**30**), wherein the rotor (**40**) comprises at least one channel (**44**) for pumping oil from the first axial side (**S1**) of the electrical machine (**30**) to a second axial side (**S2**) of the electrical machine (**30**).

2. The electrical machine arrangement of claim 1, wherein the oil cooling system (**70**) comprises a feeder pump (**72**), optionally wherein the feeder pump (**72**) is arranged remote from the electrical machine (**30**).

3. The electrical machine arrangement of claim 2, wherein the oil cooling system (**70**) further comprises a sump (**74**) and wherein the feeder pump (**72**) is configured to pump oil from said sump (**74**).

4. The electrical machine arrangement of any of claims 2-3, wherein the oil cooling system (**70**) further comprises an outlet valve (**76**) configured to control the oil flow out from the first axial side (**S1**) of the electrical machine (**30**).

5. The electrical machine arrangement of claim 4, wherein the oil cooling system (**70**) further comprises a control unit (**80**) configured to control the operation of the feeder pump (**72**) and/or the outlet valve (**76**).

6. The electrical machine arrangement of any of claims 1-5, wherein the electrical machine (**30**) further comprises an oil return channel (**52**) arranged in the radial space formed between the rotor (**40**) and the stator (**50**).

7. The electrical machine arrangement of any of claims 1-6, wherein the rotor (**40**) comprises a plurality of channels (**44**) for pumping oil from the first axial side (**S1**) of the electrical machine (**30**) to a second axial side (**S2**) of the electrical machine (**30**), optionally wherein the plurality of channels (**44**) are distributed at an equal angular space around the rotor (**40**).

8. The electrical machine arrangement of any of claims 1-7, wherein the at least one channel (**40**) is arranged at an outer circumference of said rotor (**40**), or wherein the at least one channel (**44**) is embedded in the rotor (**40**) and arranged radially inside the maximum rotor radius.

9. The electrical machine arrangement of any of claims 1-8, wherein the at least one channel (**44**) extends axially along the entire rotor (**40**) from the first axial side (**S1**) of the electrical machine (**30**) to a second axial side (**S2**) of the electrical machine (**30**).

10. The electrical machine arrangement of any of claims 1-9, wherein the at least one channel (**44**) extends along a constant radius, or wherein the at least one channel (**44**) extends from an inner radius at the first axial side (**S1**) of the electrical machine (**30**) to an outer radius at the second axial side (**S2**) of the electrical machine (**30**).

11. The electrical machine arrangement of any of claims 1-10, wherein the at least one channel (**44**) extends at a constant circumferential angle, or wherein the at least one channel (**44**) extends at a varying circumferential angle.

12. The electrical machine arrangement of any of claims 1-11, wherein the rotor (**40**) is provided with an axial flow pump (**90**) arranged at the first axial side (**S1**) of the electrical machine (**30**).

13. The electrical machine arrangement of claim 1, wherein the oil cooling system (**70**) comprises a feeder pump (**72**), a sump (**74**), an outlet valve (**76**), and a control unit (**80**), wherein the feeder pump (**72**) is arranged remote from the electrical machine (**30**) and configured to pump oil from the sump (**74**), wherein the outlet valve (**76**) is configured to control the oil flow out from the first axial side (**S1**) of the electrical machine, and wherein the control unit (**80**) is configured to control the operation of the feeder pump (**72**) and/or the outlet valve (**76**), wherein the electrical machine (**30**) further comprises an oil return channel (**52**) arranged in the radial space formed between the rotor (**40**) and the stator (**50**), wherein the rotor (**40**) comprises a plurality of channels (**44**) for pumping oil from the first axial side (**S1**) of the electrical machine (**30**) to a second axial side (**S2**) of the electrical machine (**30**), wherein the plurality of channels (**44**) are distributed at an equal angular space around the rotor (**40**), wherein the plurality of channels (**44**) are arranged at an outer circumference of the rotor (**44**) or embedded in the rotor (**40**) and arranged radially inside the maximum rotor radius, wherein the plurality of channels (**44**) extend axially along the entire rotor (**40**) from the first axial side (**S1**) of the electrical machine (**30**) to the second axial side (**S2**) of the electrical machine (**30**), wherein the plurality of channels (**44**) extend at a constant radius or from an inner radius at the first axial side (**S1**) of the electrical machine (**30**) to an outer radius at the second axial side (**S2**) of the electrical machine (**30**), wherein each of the plurality of channels (**44**) extends at a constant circumferential angle or at a varying circumferential angle, and wherein the rotor (**40**) is provided with an axial flow pump (**90**) arranged at the first axial side (**S1**) of the electrical machine (**30**).

14. A vehicle comprising the electrical machine arrangement (**10**) according to any of claims 1-13.

15. A method for cooling an electrical machine, comprising: feeding cooling oil to a first axial side of the electrical machine, pumping the cooling oil from the first axial side of the electrical machine to a second axial side of the electrical machine through at least one channel extending along the rotor, and controlling the amount of cooling oil at the first axial side in order to control a retarding effect of the electrical machine.
